# EUROPÄISCHE PATENTSCHRIFT

(11) **EP 1 449 614 B1**
(45) Veröffentlichungstag und Bekanntmachung des Hinweises auf die Patenterteilung: **02.04.2008**
(21) Anmeldenummer: 04001177.7
(22) Anmeldetag: 21.01.2004
(51) Int. Cl.: B23Q 7/14, B29C 47/34, B21D 43/00, B25B 5/14

(54) **Vorrichtung zur Bearbeitung von stangenförmigen Profilen**
System for machining bar-shaped profiles
Dispositif d'usinage de profilés en forme de barre

(30) Priorität: 24.01.2003 DE 10302899
(43) Veröffentlichungstag der Anmeldung: 25.08.2004
(73) Patentinhaber: BJM GbR, 33415 Verl (DE)
(72) Erfinder: Schirmer, Torsten, 33334 Gütersloh (DE)
(74) Vertreter: Meldau, Gustav

(56) Entgegenhaltungen:
- EP-A- 0 562 216
- GB-A- 1 506 315
- US-A- 5 320 208
- US-B1- 6 196 101

## Beschreibung

Die Erfindung betrifft eine Vorrichtung zur Bearbeitung von stangenförmigen Profilen, insbesondere Kunststoff-, Aluminium-, Holzprofile oder dergl. gemäß Oberbegriff des Anspruchs 1.

Aus dem Stand der Technik sind Fensterprofilbearbeitungsmaschinen bekannt, die aus Vorlegemagazinen für beispielsweise Kunststoffhohlprofile bestehen, an das sich Bearbeitungseinheiten anschließen, in denen die Profile gefräst, gebohrt, gesägt oder auf Fase geschnitten werden. Dabei wird das stangenförmige Profil mittels einer Zange von dem Vorlegemagazin in die Bearbeitungseinheit verbracht, wobei der Bearbeitungseinheit nachgeschaltet sich ebenfalls ein Magazin anschließt, in dem die bearbeiteten Profile zur Entnahme vorgehalten werden.

Bei einer derart aus dem Stand der Technik bekannten Vorrichtung bestehen die sogenannten Magazine bzw. Quertransporter im Wesentlichen aus einer Endlosförderkette auf der Konterprofile angeordnet sind, die die stangenförmigen Profile zur Stabillage aufnehmen. Dabei sind die Konterprofile entsprechend auch in den Bearbeitungsstationen selbst vorgesehen, damit die stangenförmigen Profile auch dort während der Bearbeitung die notwendige Stabillage haben. Das Konterprofil kann dabei aus einem stufenförmigen Profil bestehen, so dass ein Kunststoffhohlprofil beispielsweise mit einem Blendrahmen derart ausgerichtet auf das Konterprofil gelegt werden kann, dass sich eine ausgerichtete Querlage für das Kunststoffprofil auf dem Konterprofil ergibt. Die ausgerichtete Querlage ist insbesondere wichtig sowohl für den betriebsicheren Transport als auch für die Bearbeitung der einzelnen Profile, weil dadurch ein sauberer Trennschnitt bzw. ein sauberer Gehrungsschnitt an dem zu bearbeitenden Profil vorgenommen werden kann. Die Vorrichtung wird dabei elektronisch gesteuert, so dass sie einer bestimmten Taktbewegung unterliegt, und entsprechende Arbeitsvorgänge an den einzelnen stangenförmigen Profilen vorgenommen werden können. Einer derartigen Taktbewegung unterliegen dann auch die Fördereinrichtungen an denen die Konterprofile befestigt sind.

Als Problem bei einer derartig nach dem Stand der Technik bekannten Vorrichtung zur Bearbeitung von stangenförmigen Profilen wird es angesehen, dass insbesondere die Konterprofile nur einen gewissen Freiheitsgrad zur ausgerichteten Querlage eines stangenförmigen Profils haben. Bei der Vielzahl von unterschiedlichen Profilquerschnitten ist es dann erforderlich, dass die Konterprofile als solches zur Bearbeitung von stangenförmigen Profilen mit größerem oder kleinerem Querschnitt in der Vorrichtung gewechselt werden müssen, um dann die entsprechenden Profile zu verarbeiten. Ein derartiger Wechsel bzw. Austausch von Konterprofilen ist äußerst kosten- und arbeitsintensiv.

Hieraus ergibt sich die der Erfindung zugrunde liegende Aufgabe, eine Vorrichtung zur Bearbeitung von stangenförmigen Profilen dahingehend weiter zu bilden, die eine flexible Gestaltungsmöglichkeit von zu verarbeitenden stangenförmigen Profilen mit unterschiedlichen Querschnitten aufweist.

Diese Aufgabe wird erfindungsgemäß durch eine Vorrichtung mit den Merkmalen des Anspruchs 1 gelöst. Die Auflager sind an dem Konterprofil verstellbar angeordnet zur Aufnahme von unterschiedlich im Querschnitt geformten Stangenprofilen. Diese Ausbildung ermöglicht es nun, dass stangenförmige Profile unterschiedlicher Querschnitte über ein und dasselbe Konterprofil gefahren werden können, bzw. bearbeitet werden, da die Auflager entsprechend der Profilform am Konterprofil ausgerichtet werden können. Die Auflager können somit auf jede beliebige Querschnittsform eines stangenförmigen Profils eigens abgestellt werden, so dass eine ausgerichtete sichere Querlage des stangenförmigen Profils gewährleistet ist. Dadurch wird eine saubere Bearbeitung und gesicherte Positionierung der einzelnen stangenförmigen Profile ermöglicht. Ein Umrüsten der Vorrichtung mit entsprechend geformten Konterprofilen entfällt hierbei gänzlich.

Gemäß der Erfindung sind die Auflager gegenüber dem Konterprofil horizontal und vertikal verstellbar angeordnet. Somit ergeben sich Freiheitsgrade, die an jede Querschnittsform eines Stangenprofils angepasst werden können. Dabei umfassen die Auflager Profilleisten, die mit einem auf dem Konterprofil angeordneten Stelltrieb zusammenwirken. Die Auflager als Profilleisten auszubilden, gewährleistet eine sichere Auflage für das stangenförmige Profil, wobei in Weiterbildung die Profilleiste als solches horizontal und vertikal gegenüber dem Konterprofil verstellt werden kann. Dies erfolgt mittels eines Stelltriebes, der durch einen Stellmotor angetrieben wird. Der Stellmotor zur Betätigung wird dabei auf die Taktbewegung der Vorrichtung eingestellt. Es versteht sich nun von selbst, dass, wenn das einzelne Konterprofil nach einer Taktbewegung sich in einer Stilllage befindet, entsprechend eines im Bereich des Untertrums angeordneten Stellmotors, dieser in den Stelltrieb eingreift, um auf diese Weise das Auflager an dem Konterprofil entsprechend einzustellen.

Die Steuerung hierzu erfolgt über eine Teilerfassung, so dass die entsprechenden Daten, betreffend des stangenförmigen Profils, an den Stellmotor gegeben werden, der den Stelltrieb entsprechend bedient. Hierzu wirken die Stellmotore von außen auf die Stelltriebe der Auflager ein.

Nach einer besonders vorteilhaften Weiterbildung, insbesondere der Horizontal- bzw. der Vertikalverstellung, erfolgt die Horizontalverstellung der Profilleiste mittels einer Kulissenführung, wobei die Vertikalverstellung der Profilleiste mittels eines Gelenkhebelgetriebes erfolgt. Dabei wirkt sowohl die Kulissenführung als auch das Gelenkhebelgetriebe mit jeweils separaten Gewindebolzen zur Betätigung zusammen. Um die Horizontallage bzw. die Vertikallage der Profilleiste zu bewirken, sind neben einer mechanischen Lösung auch andere, wie pneumatische, hydraulische Lösungen oder Lösungen mit elektrischen Mitteln bzw. Elementen möglich. Die beschriebene mechanische Verstellmöglichkeit stellt daher nur eine Ausführungsform dar.

Ein Ausführungsbeispiel der Erfindung wird anhand der nachstehenden Figuren 1 bis 5 näher erläutert; dabei zeigen:
- Figur 1:: Eine Seitenansicht einer Fördereinrichtung mit Konterprofilen, auf denen Kunststoffhohlprofile in der Querlage angedeutet sind:
- Figur 2:: Eine Stirnansicht eines Konterprofils mit einem verstellbaren Auflager;
- Figur 3:: Eine geschnittene Seitenansicht eines Konterprofils mit ausgefahrenem Auflager;
- Figur 4:: Eine Draufsicht auf ein Konterprofil mit verstellbarem Auflager gemäß der Figur 3; und
- Figur 5:: Eine Detailansicht des Stelltriebes für ein verstellbares Auflager an einem Konterprofil.

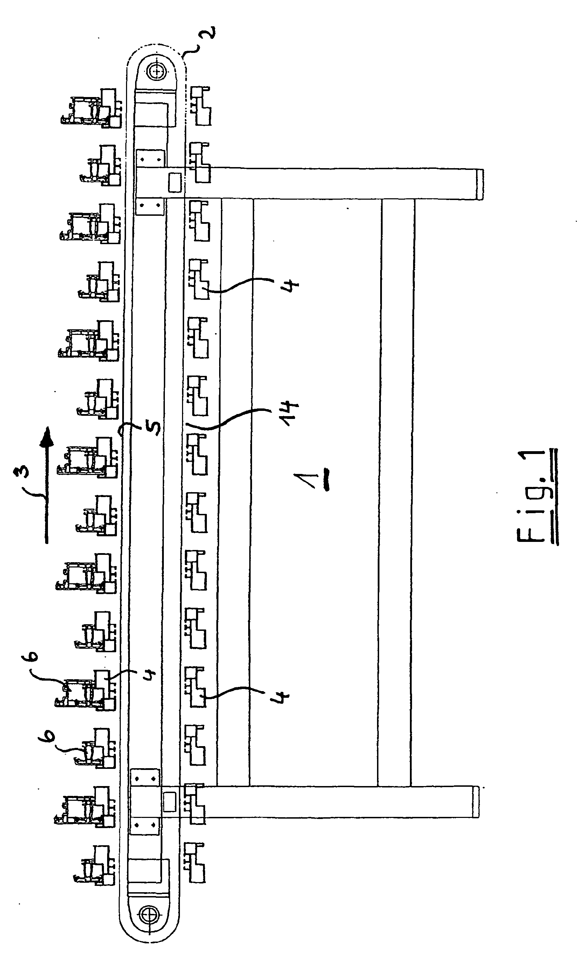

Die Figur 1 zeigt in der Seitenansicht ein Vorlegemagazin 1 für eine nicht näher dargestellte Fenster-Profilbearbeitungsvorrichtung, welches im Wesentlichen aus einer umlaufenden Förderkette 2 besteht, an der quer zur Förderrichtung 3 die einzelnen Konterprofile 4 festgelegt sind. Wie aus der Seitenansicht des Vorlegemagazins 1 zu erkennen ist, befinden sich auf dem Obertrum 5 stangenförmige Profile 6, die hinsichtlich ihrer Querschnittserstreckungen angedeutet sind. Die stangenförmigen Profile 6 liegen dabei derart auf den Konterprofilen 4 auf, dass sie eine ausgerichtete Querlage aufweisen. Es versteht sich von selbst, dass bei einer Bewegung gemäß der Pfeilrichtung 3 vorne die stangenförmigen Profile 5 auf die Konterprofile 4 aufgelegt werden, wobei sie am Ende der Förderkette 2 zur Bearbeitung von den Konterprofilen 4 gezogen oder von nicht näher dargestellten Zangen ergriffen werden, um sie einer ebenfalls nicht näher dargestellten Bearbeitungsstation zuzuführen.

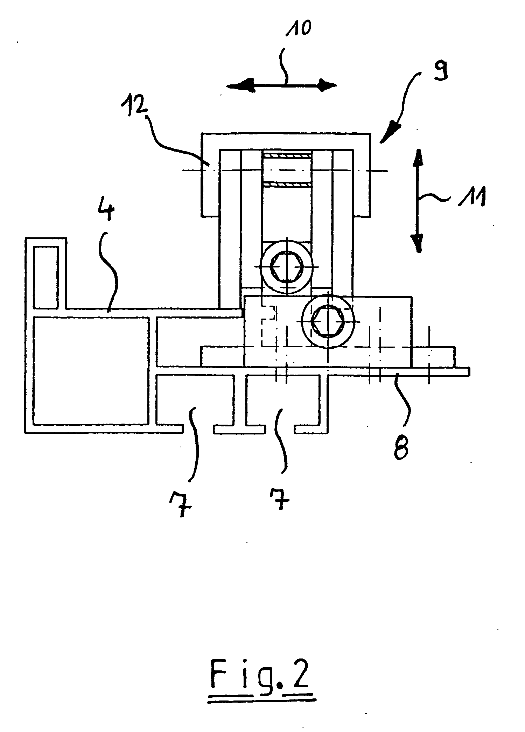

Die Konterprofile 4 selbst weisen an ihrer Unterseite Nuten 7 auf, so dass sie mittels eines nicht näher dargestellten Nutensteins an der umlaufenden Förderkette 2 festgelegt werden können. Wie aus der Figur 2 in Stirnansicht zu erkennen ist, kann beispielsweise das Konterprofil 4 im Wesentlichen aus einer L-Form gebildet sein, wobei auf dem langen Schenkel 8 des Konterprofils 4 ein Auflager 9 angeordnet ist, welches gemäß der dort angedeuteten Pfeilrichtungen 10 und 11 verstellt werden kann, zur Aufnahme von unterschiedlich im Querschnitt geformten Stangenprofilen 6. Dabei kann das Auflager 9 gemäß der Pfeilrichtung 10 gegenüber dem Konterprofil 4 einmal in beide Richtungen horizontal verschoben werden, also auf der Fläche des Konterprofilschenkels 8, aber auch vertikal, also in seiner Höhe gemäß der Pfeilrichtung 11 verstellt werden. Somit kann das Auflager 9 entsprechend dem vorgegebenen Profilquerschnitt eines stangenförmigen Profils 6 ausgerichtet werden, so dass ein stabiles sicheres Auflager 9 auf dem Konterprofil 4 gegeben ist.

Ein derart ausgebildetes Konterprofil 4 ermöglicht es nun aufgrund der zusätzlichen Freiheitsgrade Querschnitte von stangenförmigen Profilen 6 aufzunehmen, die hierbei unterschiedlich ausgebildet sein können.

Das Ausführungsbeispiel gemäß der Figur 2 zeigt nur ein verstellbares Auflager 9, wobei entsprechend auch zwei oder drei verstellbare Auflager 9 auf einem Konterprofil 4 angeordnet sein können.

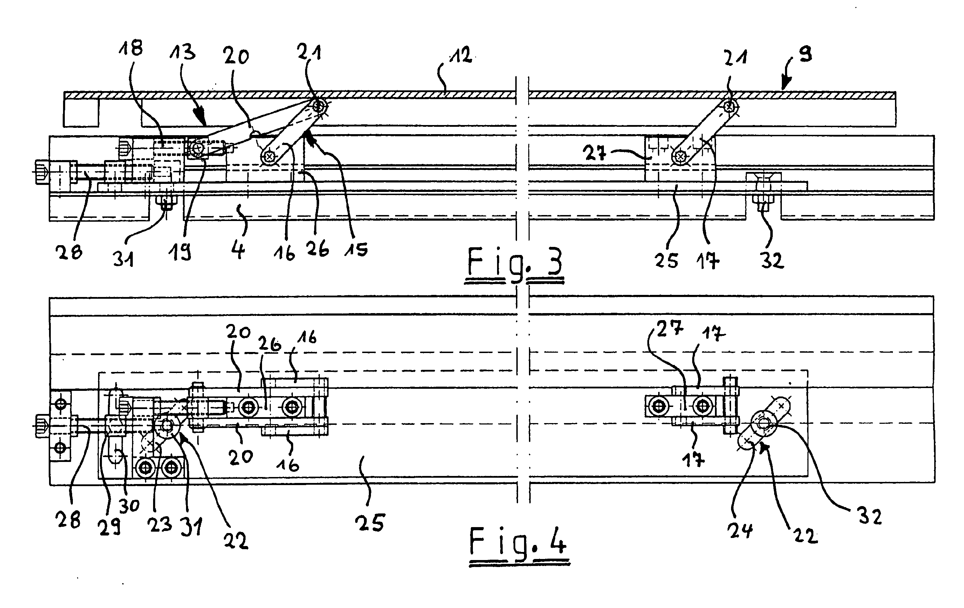

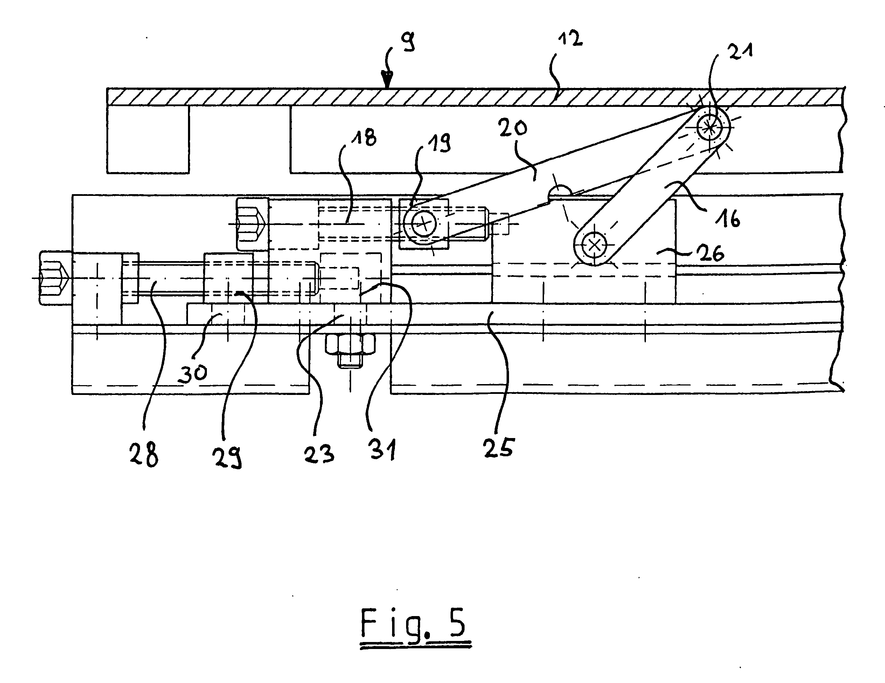

Wie aus den Figuren 3, 4 und 5 zu erkennen ist, umfassen die Auflager 9 eine Profilleiste 12, die im Wesentlichen eine U-Form aufweist. Dabei wirkt die Profilleiste 12 mit einem auf dem Konterprofil 4 angeordneten Stelltrieb 13 zusammen. Der Stelltrieb 13 kann dabei mittels eines nicht näher dargestellten Stellmotors bedient werden. Dabei kann beispielsweise der Stellmotor auf den Stelltrieb 13 derart einwirken, dass er im Bereich des Untertrums 14 der Förderkette 2 angeordnet ist, wobei entsprechend der Taktvorgabe dieser die entsprechende Verstellung an dem Auflager 9 vornimmt. So ist das auf die Obertrumseite 5 gelangende Konterprofil 4 eingestellt, so dass es für die Aufnahme des entsprechenden stangenförmigen Profils 9 justiert ist. Die Betätigung der Stellmotore ist dabei auf die Taktbewegung der Vorrichtung eingestellt. Die Stellmotore wirken dabei von außen auf die Stelltriebe 13 der Auflager 9 ein.

Aus den Figuren 3 bis 5 wird ersichtlich, wie die Horizontalverstellung sowie die Vertikalverstellung der Profilleiste 12 an dem Konterprofil 4 vorgenommen wird. Wie aus der Figur 3 zu erkennen ist, erfolgt die Vertikalverstellung der Profilleiste 12 mittels eines Gelenkhebelgetriebes 15, wobei jeweils im vorderen Bereich und im hinteren Bereich der Profilleiste 12 ein Gelenkhebel 16 und 17 vorgesehen ist, wobei die Hebelmechanik parallelogrammartig angeordnet ist. Wie aus der Figur 3 zu erkennen ist, wirkt das Gelenkhebelgetriebe 15 mit einem Gewindebolzen 18 zusammen, an dem ein Gleitelement 19 vorgesehen ist, welches wiederum über eine Zugstange 20 mit dem oberen Gelenkpunkt 21 des Gelenkhebelgetriebes 15 zusammenwirkt. Wird also der Gewindebolzen 18 verdreht, so hebt sich die Profilleiste 12 oder wird entsprechend abgesenkt.

Die Figur 4 zeigt in der Draufsicht die Horizontalverstellung der Profilleiste 12 mittels einer Kulissenführung 22, wobei deutlich zu erkennen ist, dass unter einer Winkellage von etwa 45° jeweils Langlöcher 23 und 24 am vorderen und hinteren Ende an einer Grundplatte 25 vorgesehen sind. Durch die Langlöcher 23 und 24 ragen Schrauben 31 und 32, die an dem Konterprofil 4 festegelegt sind. Auf der Grundplatte 25 ist das Gelenkhebelgetriebe 15, sowie die Lagerböcke 26 und 27 für die Gelenkhebel 16 und 17 angeordnet. Somit ergibt sich eine Zwangsführung in der Horizontalen für die Grundplatte 25, die ebenfalls durch einen Gewindebolzen 28 bewirkt wird. Der Gewindebolzen 28 wirkt dabei ebenfalls mit einem Gleitstein 29 zusammen, der in eine querverlaufende Langlochöffnung 30 in der Grundplatte 25 greift. Wird nun der Gewindebolzen 28 verdreht, so verschiebt sich die Grundplatte 25 infolge der Zwangsführung bedingt durch die Langlöcher 23 und 24 in horizontaler Lage, so dass die Profilleiste 12 gemäß der Pfeilrichtung 10 entsprechend horizontal verschoben wird.

## Patentansprüche

1. Vorrichtung zur Bearbeitung von stangenförmigen Profilen, insbesondere Kunststoff-, Aluminium-, Holzprofile oder dergl., umfassend ein Vorlegemagazin, welches aus einer umlaufenden Förderkette (2) besteht, an der quer zur Förderrichtung (3) die einzelnen Konterprofile (4) festgelegt sind, und wobei die stangenförmigen Profile zur Stabillage auf den Konterprofilen mit Auflagern aufliegen, die eine ausgerichtete Querlage des stangenförmigen Profils ermöglichen, **dadurch gekennzeichnet, dass** die Auflager (9) an dem Konterprofil 1 (4) verstellbar zur Aufnahme von unterschiedlich im Querschnitt geformten Stangenprofilen (6) angeordnet sind wobei die Auflager (9) gegenüber dem Konterprofil (4) horizontal und vertikal verstellbar angeordnet sind.

2. Vorrichtung nach Anspruch 1, **dadurch gekennzeichnet, dass** die Auflager (9) eine Profilleiste (12) umfassen, die mit einem auf dem Konterprofil (4) angeordnetem Stelltrieb (13) zusammenwirkt.

3. Vorrichtung nach Anspruch 2, **dadurch gekennzeichnet, dass** der Stelltrieb (13) mittels Stellmotore bedienbar ist.

4. Vorrichtung nach Anspruch 3, **dadurch gekennzeichnet, dass** die Stellmotoren eine Betätigung vornehmen, die auf die Taktbewegung der Vorrichtung eingestellt ist.

5. Vorrichtung nach Anspruch 4, **dadurch gekennzeichnet, dass** die Stellmotoren von außen auf die Stelltriebe (13) der Auflager (9) einwirken.

6. Vorrichtung nach einem der vorhergehenden Ansprüche 1 bis 5, **dadurch gekennzeichnet, dass** die Horizontalverstellung der Profilleiste (12) mittels einer Kulissenführung (22) erfolgt.

7. Vorrichtung nach Anspruch 6, **dadurch gekennzeichnet, dass** die Vertikalverstellung der Profilleiste (12) mittels eines Gelenkhebelgetriebes (15) erfolgt.

8. Vorrichtung nach den Ansprüchen 6 und 7 **dadurch gekennzeichnet, dass** sowohl die Kulissenführung (22) als auch das Gelenkhebelgetriebe (15) mit Gewindebolzen (18, 28) zur Betätigung zusammenwirkt.

## Claims

1. Device for the machining of bar-shaped profiles, in particular, synthetic-material, aluminium and wooden profiles or similar, comprising a magazine feeder, which consists of a circulating conveyor belt (2), to which the individual counter profiles (4) are attached transversely to the feeding direction (3), and wherein, for stable positioning, the bar-shaped profiles are arranged on the counter profiles together with supports, which allow a transverse alignment of the bar-shaped profiles,
**characterised in that**
the supports (9) are arranged on the counter profile (4) in an adjustable manner in order to accommodate bar-shaped profiles (6) designed with different cross-sections, wherein the supports (9) are arranged to be horizontally and vertically adjustable relative to the counter profile (4).

2. Device according to claim 1,
**characterised in that**
the supports (9) comprise a profiled strip (12), which cooperates with an adjustment drive (13) arranged on the counter profile (4).

3. Device according to claim 2,
**characterised in that**
the adjustment drive (13) can be operated by means of adjustment motors.

4. Device according to claim 3,
**characterised in that**
the adjustment motors perform an actuation, which is adapted to the cyclical movement of the device.

5. Device according to claim 4,
**characterised in that**
the adjustment motors act on the adjustment drives (13) of the supports (9) from the outside.

6. Device according to any one of the preceding claims 1 to 5,
**characterised in that**
the horizontal adjustment of the profiled strip (12) is implemented by means of a rocker guide (22).

7. Device according to claim 6,
**characterised in that**
the vertical adjustment of the profile strip (12) is implemented by means of an articulated-lever transmission (15).

8. Device according to claims 6 and 7,
**characterised in that,**
for their actuation, both the rocker guide (22) and also the articulated-lever transmission (15) cooperate with threaded pins (18, 28).

## Revendications

1. Dispositif d'usinage de profilés en forme de barre, en particulier des profilés en plastique, aluminium, bois ou similaires, comprenant un magasin de chargement, qui se compose d'une chaîne de transport (2) circulaire au niveau de laquelle chaque contre-profilé (4) est fixé transversalement au sens de transport (3) et dans lequel, pour assurer leur stabilité, les profilés en forme de barre reposent sur les contre-profilés avec supports, qui permettent une orientation transversale du profilé en forme de barre, **caractérisé en ce que** les supports (9) sont disposés de manière réglable au niveau du contre-profilé (4) pour recevoir des profilés de barre (6) de sections transversales différentes, les supports (9) étant disposés de manière réglable horizontalement et verticalement par rapport au contre-profilé (4).

2. Dispositif selon la revendication 1, **caractérisé en ce que** les supports (9) comprennent une baguette profilée (12), qui coopère avec un mécanisme de réglage (13) disposé sur le contre-profilé (4).

3. Dispositif selon la revendication 2, **caractérisé en ce que** le mécanisme de réglage (13) peut être commandé au moyen de servomoteurs.

4. Dispositif selon la revendication 3, **caractérisé en ce que** les servomoteurs procèdent à un actionnement, qui est réglé sur le mouvement cyclique du dispositif.

5. Dispositif selon la revendication 4, **caractérisé en ce que** les servomoteurs agissent de l'extérieur sur les mécanismes de réglage (13) des supports (9).

6. Dispositif selon l'une quelconque des revendications précédentes 1 à 5, **caractérisé en ce que** le réglage horizontal de la baguette profilée (12) se fait par le biais d'un guide de coulisse (22).

7. Dispositif selon la revendication 6, **caractérisé en ce que** le réglage vertical de la baguette profilée (12) se fait au moyen d'au moins une transmission à levier articulé (15).

8. Dispositif selon les revendications 6 et 7, **caractérisé en ce qu'**aussi bien le guide de coulisse (22) que la transmission à levier articulé (15) coopèrent avec des boulons filetés (18, 28) pour l'actionnement.
